# FASCICULE DE BREVET EUROPEEN

(11) **EP 3 244 184 B1**
(45) Date de publication et mention de la délivrance du brevet: **24.03.2021**
(21) Numéro de dépôt: 17169104.1
(22) Date de dépôt: 02.05.2017
(51) Int. Cl.: G01M 15/14, F01D 21/00, G01N 21/88

(54) **PROCÉDÉ ET BANC D'ESSAI DE TURBOMACHINE À RÉALITÉ AUGMENTÉE**
VERFAHREN UND PRÜFSTAND ZUR PRÜFUNG EINER TURBOMASCHINE ANHAND DER ERWEITERTEN REALITÄT
AUGMENTED-REALITY TEST METHOD AND TEST BENCH FOR A TURBINE ENGINE

(30) Priorité: 09.05.2016 BE 201605327
(43) Date de publication de la demande: 15.11.2017
(73) Titulaire: Safran Aero Boosters SA, 4041 Herstal (BE)
(72) Inventeur: COLSON, Jean-François, 4650 Herve (BE)
(74) Mandataire: Lecomte & Partners

(56) Documents cités:
- EP-A1- 2 642 331
- FR-A1- 3 017 711
- US-A1- 2007 276 601
- US-A1- 2009 154 293
- US-A1- 2014 185 912
- US-A1- 2014 207 514
- ANONYMOUS: "ISO 2314:2009(en) Gas turbines - Acceptance tests", ISO NORM, ISO, CH , vol. ISO 2314:2009(en) 15 December 2009 (2009-12-15), pages 1-112, XP009509461, Retrieved from the Internet: URL:https://www.iso.org/standard/42989.htm l
- David W Haas: "The Instrumentation Design and Control of a T63-A-700 Gas Turbine Engine", , 1 June 1996 (1996-06-01), XP055529365, Retrieved from the Internet: URL:https://apps.dtic.mil/dtic/tr/fulltext /u2/a313333.pdf [retrieved on 2018-12-03]
- E M Takemori ET AL: "Stationary Gas Turbine-Generator Set Acceptance Testing Procedures, Methods, and Instructions", , 24 January 2012 (2012-01-24), XP055524360, Retrieved from the Internet: URL:http://www.dtic.mil/dtic/tr/fulltext/u 2/a043170.pdf [retrieved on 2018-11-15]

## Description

### Domaine technique

L'invention se rapporte au test d'une turbomachine. En particulier, l'invention concerne un procédé de test d'une turbomachine dans un banc d'essai. L'invention a encore pour objet un programme d'ordinateur ainsi qu'un ordinateur qui sont utilisés dans le cadre du test d'une turbomachine.

### Technique antérieure

Lors de la conception, de la fabrication, et de l'entretien d'un turboréacteur, plusieurs essais sont réalisés sur un banc d'essai spécifique. Le fonctionnement du turboréacteur est vérifié en conditions réelles d'utilisation afin de prouver sa fiabilité et de valider les informations théoriques. Un tel banc d'essai permet notamment de mesurer la poussée du turboréacteur.

Le document EP 3 009 826 A1 divulgue un banc d'essais pour un turboréacteur type double flux. Le banc d'essais est une infrastructure au sol comportant un couloir recevant le turboréacteur. Lors du test, le turboréacteur reçoit différents équipement spécifiquement prévus pour le test. Parmi ces équipements on recense un capot de test, ou encore une bouche d'entrée dédiée.

Au préalable, une inspection du banc d'essai doit être effectuée avant de conduire le test à proprement parler. En particulier, le bon montage des équipements de test doit être vérifié. Il convient également de s'assurer qu'aucun objet étranger ne soit resté dans le couloir du banc d'essai ; sans quoi ces objets pourraient être aspirés par le turboréacteur ou projeté au travers du banc d'essai. Dans un pareil cas, des dégâts importants surviennent. Plus important encore, il faut s'assurer qu'aucune personne ne soit restée dans le banc d'essai.

L'ensemble de ces vérifications nécessite du temps et augmente à mesure que le banc d'essai s'allonge. La complexité du banc d'essai rajoute des incertitudes quant à la précision de la vérification. Les angles morts depuis la salle de pilotage réduit la fiabilité des contrôles.

Les documents US2007/27660A1 et FR3017711A1 divulguent des procédés de test de turbomachine. Le document US2009/154293A1 propose un programme d'ordinateur permettant de détecter des anomalies. Les documents EP2642331A1 et US2014/185912A1 mentionnent des moyens de réalité augmentée pour inspecter une turbomachine.

La norme ISO 2314, 3^{ème} édition du 15.12.2009, référence ISO 2314-2009(E), divulgue un procédé de test de turbomachine, selon le préambule de la revendication 1, et un banc d'essai selon le préambule de la revendication 11.

### Résumé de l'invention

### Problème technique

L'invention a pour objectif de résoudre au moins un des problèmes posés par l'art antérieur. Plus précisément, l'invention a pour objectif d'améliorer la sécurité du test d'une turbomachine. L'invention vise également à optimiser la rapidité et la fiabilité d'un test de turbomachine.

### Solution technique

L'invention a pour objet un procédé de test d'une turbomachine dans un banc d'essai, selon la revendication 1.

Selon un mode avantageux de l'invention, lors de la phase (a) inspection, des points caractéristiques sont contrôlés à l'intérieur du banc d'essai afin de déceler une ou plusieurs anomalies du premier type.

Selon un mode avantageux de l'invention, lors de la phase (a) inspection, le système de réalité augmentée compare le banc d'essai réel et/ou la turbomachine réelle à une ou plusieurs images virtuelles qui sont contenues dans une base de données.

Selon un mode avantageux de l'invention, la base de données comprend des images virtuelles d'éléments intrus, lors de la phase (a) inspection, le système vérifie l'absence d'intrus ; et en cas de détection d'un intrus le système signale une anomalie d'un premier type.

Selon un mode avantageux de l'invention, lors de la phase (a) inspection, le système de réalité augmentée produit une image virtuelle qu'il compare à une image virtuelle libre d'anomalie du premier type.

Selon un mode avantageux de l'invention, la phase (a) inspection comprend une inspection de capteurs à l'intérieur du banc d'essai.

Selon un mode avantageux de l'invention, la phase (a) inspection comprend une succession d'étapes de vérification de différents paramètres, éventuellement le procédé ne continue la succession des étapes de vérification qu'en l'absence d'anomalie du premier type.

Selon un mode avantageux de l'invention, la phase (a) inspection comprend la détection d'au moins une anomalie d'un deuxième type, le procédé effectuant la phase (b) test en présence d'au moins une ou plusieurs anomalies du deuxième type.

Selon un mode avantageux de l'invention, le banc d'essai comprend un couloir dans lequel la turbomachine est disposée pendant la phase (a) inspection et/ou pendant la phase (b) test, la phase (a) inspection étant au moins partiellement réalisée par un opérateur dans ledit couloir.

Selon un mode avantageux de l'invention, le banc d'essai comprend une salle de pilotage du test, par exemple attenante au couloir, la phase (a) inspection étant au moins partiellement réalisée par un opérateur dans ladite salle.

Selon un mode avantageux de l'invention, lors de la phase (b) test, le système de réalité augmentée affiche une température d'un flux traversant le banc d'essai, et/ou une vitesse d'écoulement d'un flux traversant le banc d'essai, et/ou une température d'un flux traversant la turbomachine.

Selon un mode avantageux de l'invention, lors de la phase (b) test, le système de réalité augmentée affiche un niveau vibratoire dans le banc d'essai, notamment d'un équipement de test et/ou de la turbomachine.

Selon un mode avantageux de l'invention, le système de réalité augmentée comprend un module d'affichage qui affiche une image à un utilisateur, notamment un signal d'alerte en cas de détection d'une anomalie du premier type.

Selon un mode avantageux de l'invention, la turbomachine est visible depuis le module d'affichage.

Selon un mode avantageux de l'invention, pendant la phase (a) inspection, la turbomachine et le module d'affichage sont distants de moins de 50 m, ou de moins de 20 m, ou de 10 m.

Selon un mode avantageux de l'invention, le système de réalité augmentée comprend au moins une ou plusieurs caméras filmant la turbomachine pendant la phase (a) inspection, une caméra étant éventuellement intégrée dans le module d'affichage.

Selon un mode avantageux de l'invention, la turbomachine est un turboréacteur ou un turbopropulseur adapté pour générer un souffle de propulsion, par exemple pour la propulsion d'un aéronef.

Selon un mode avantageux de l'invention, le système de réalité augmentée conduit une analyse en continu et/ou en temps réel.

Selon un mode avantageux de l'invention, la phase (a) inspection est effectuée humainement en plus du système de réalité augmentée.

Selon un mode avantageux de l'invention, la phase (a) inspection comprend une inspection du banc d'essai et/ou de la turbomachine, et/ou de capteurs de test sur la turbomachine.

Selon un mode avantageux de l'invention, les capteurs sont propres au banc d'essai, et/ou à la turbomachine, notamment en configuration de test.

Selon un mode avantageux de l'invention, la phase (b) test comprend le démarrage de la turbomachine.

Selon un mode avantageux de l'invention, la phase (b) test démarre après le démarrage, et/ou après la fin de la phase (a) inspection, lesdites phases étant éventuellement effectuées simultanément, optionnellement en partie simultanément.

Selon un mode avantageux de l'invention, les équipements de test comprennent un capot de test pour turbomachine, et/ou une bouche d'entrée d'air de turbomachine.

Selon un mode avantageux de l'invention, lorsque le système de réalité augmentée identifie une anomalie du premier type, la phase (b) test est interrompue ou empêchée.

Selon un mode avantageux de l'invention, le procédé arrête la phase (a) inspection et/ou la phase (b) test lorsqu'une anomalie du premier type est décelée.

Selon un mode avantageux de l'invention, le système de réalité augmentée reste actif pendant la phase (b) test, et continue l'inspection visuelle du banc d'essai pendant la phase (b) test.

L'invention a également pour objet un banc d'essai pour turbomachine, selon la revendication 11.

Selon un mode avantageux de l'invention, le banc d'essai comprend au moins 100 capteurs, ou au moins 1000 capteurs, ou au moins 10000 capteurs.

Selon un mode avantageux de l'invention, le banc d'essai comprend un tube collecteur en aval de la turbomachine, notamment pour collecter le souffle de propulsion.

Selon un mode avantageux de l'invention, la longueur du couloir est supérieure ou égale à 20 m, ou à 40 m, ou à 70 m. La longueur du couloir peut être mesurée en ligne droite.

Selon un mode avantageux de l'invention, le couloir présente une section de passage d'au moins 4m2, ou 25 m2, ou 50 m2, ou 100 m2, par exemple au niveau de la turbomachine.

Selon un mode avantageux de l'invention, la turbomachine est apte à exercer une poussée supérieure ou égale à 20 kN, ou 80 kN, ou 200 kN, 500 kN. Le bras de fixation étant éventuellement conçu pour reprendre les efforts correspondants.

L'invention a également pour objet un programme d'ordinateur comportant des instructions pour l'exécution des phases du procédé de test selon l'invention. L'invention a également pour objet un ordinateur sur lequel est enregistré un programme d'ordinateur comprenant des instructions pour l'exécution des phases du procédé de test conforme à l'invention, lorsque ledit programme est exécuté par un ordinateur connecté à au moins une caméra configurée pour filmer tout ou partie du banc d'essai.

### Avantages apportés

L'invention offre d'avantage de sécurité pour le test car des moyens électroniques accompagnent l'opérateur en charge de l'inspection. La caméra du système de réalité augmentée est plus sensible que l'œil humain, ce qui permet de détecter plus rapidement ; plus finement ; avec davantage de certitude un cas anormal.

Le système de réalité augmentée reconnaît en même temps que l'utilisateur les différents éléments à contrôler lorsqu'il les inspecte. Cette double vérification diminue très fortement la probabilité de manquer un danger car les failles des modes de vérification se corrigent et se compensent mutuellement.

Par ailleurs, l'invention peut réduire le temps nécessaire à l'inspection car un simple balayage par caméra des zones à vérifier permet de prendre position sur la configuration du banc d'essai. Par ailleurs, le déplacement de l'opérateur tend à balayer une zone plusieurs fois car le système de réalité augmentée fonctionne en continu. A nouveau, cette caractéristique tend à faire chuter les failles de l'inspection.

### Brève description des dessins

La figure 1 représente un banc d'essai selon l'invention.
La figure 2 est un schéma d'une portion du banc d'essai de la figure 1.
La figure 3 illustre un diagramme du procédé de test selon l'invention.

### Description des modes de réalisation

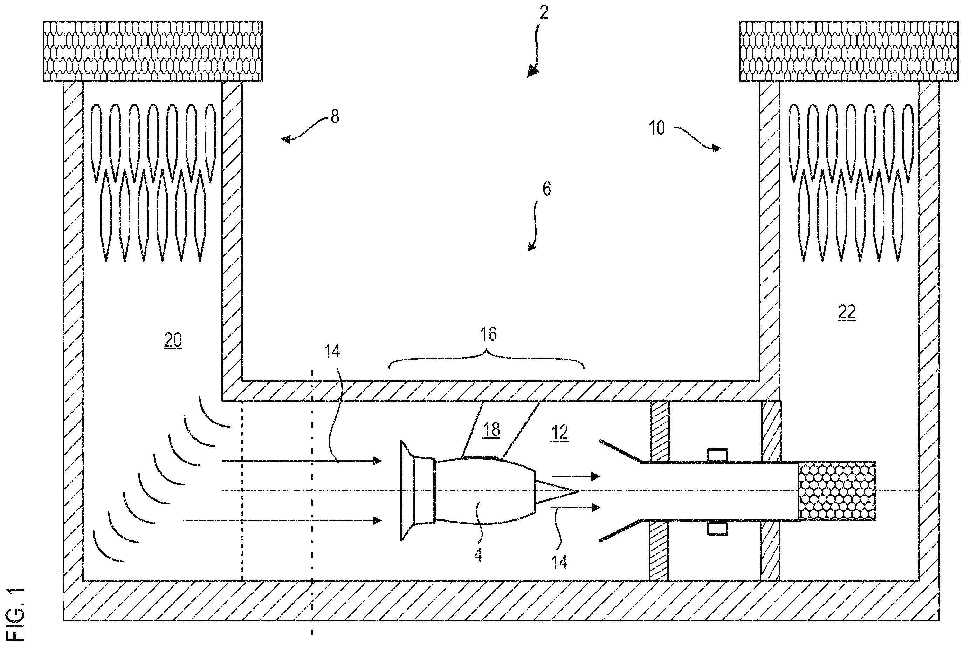

La figure 1 représente de manière simplifiée un banc d'essai 2 pour turbomachine 4. En l'occurrence il s'agit d'un turboréacteur double-flux, par exemple pour la propulsion d'un avion. La turbomachine peut comprendre une soufflante propulsant de l'air au travers du banc d'essai 2, ce souffle générant par ailleurs une poussée permettant de propulser un avion.

Le banc d'essai 2 forme une infrastructure, une construction. Il comprend un passage 6 avec une entrée 8 et une sortie 10. Le passage 6 peut comprendre un couloir 12 essentiellement allongé en ligne droite, et éventuellement horizontal. Sa longueur peut être supérieure ou égale à 80 m. La longueur du couloir 12 permet la circulation en ligne droite d'un flux d'air 14 ou circulation d'air 14 traversant le passage 6. Ce flux d'air 14 circule au travers du banc d'essai 2 en raison du souffle de la turbomachine 4.

Afin de limiter la résistance à l'écoulement, en particulier l'entrée d'un flux d'air 14 dans le turboréacteur 4, le couloir 12 peut présenter une section de passage supérieure ou égale à 50 m2. La section de passage, ou section libre, peut être mesurée en amont de la zone de fixation 16 destinée à recevoir la turbomachine 4. La zone de fixation 16 peut être un tronçon du couloir 12 selon sa longueur. La section de passage peut être observable sur au moins un quart de la longueur du couloir 12, préférentiellement sur la majorité de la longueur. La zone de fixation 16, est éventuellement munie d'un bras de fixation 18, où la turbomachine 4 est montée. Le bras 18 peut s'étendre verticalement depuis le plafond du couloir 12, à la manière d'une colonne ou d'un poteau. Le bras 18 permet de monter le turboréacteur 4 avec un déport, et de centrer ce dernier au milieu du couloir 12. Le centrage est vertical et horizontal.

Le couloir 12 peut être délimité par des cheminées verticales (20 ; 22) en entrée 8 et en sortie 10. La configuration en « U » détaillée ici n'est pas indispensable ; d'autres configurations, par exemple sans cheminées, sont envisageables.

Suivant une variante de l'invention, le banc d'essai peut être un banc d'essai à ciel ouvert. Il peut comprendre au banc d'essai en plein air tel que décrit dans le document EP 3 009 826 A1.

Le banc d'essai 2 peut être muni de systèmes de récupération d'énergie. Des obturateurs peuvent également être agencés au travers du banc d'essai pour y éteindre un incendie.

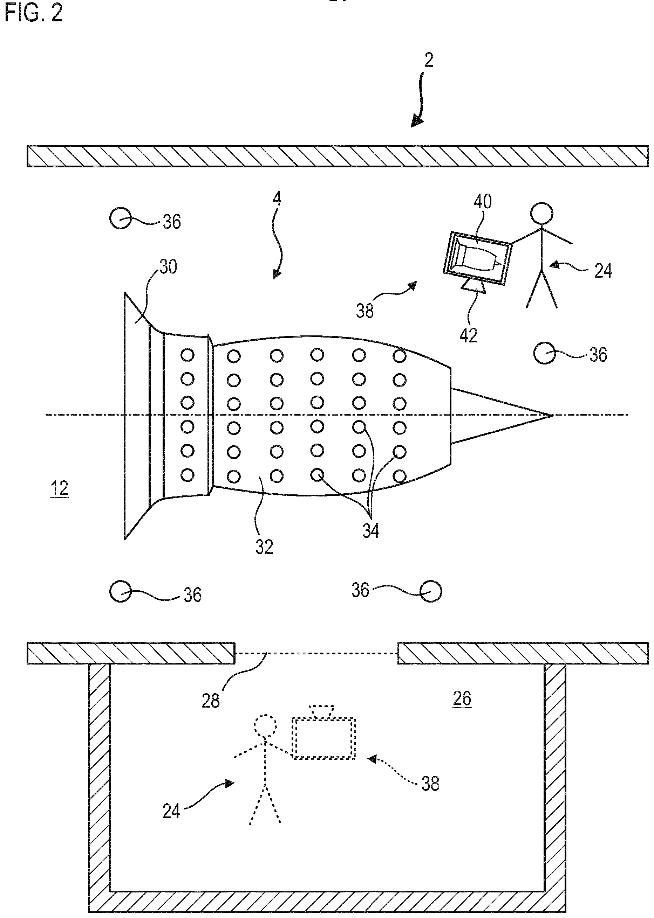

La figure 2 est une vue du dessus du banc d'essai 2 selon l'invention. Le bras de fixation n'est pas représenté. Un ou plusieurs opérateurs 24 effectuent une inspection avant de démarrer un test de la turbomachine 4.

L'inspection peut être conduite par un opérateur 24 depuis le couloir 12, et/ou depuis une salle de pilotage 26 attenante au couloir 12. La salle de pilotage 26 comporte éventuellement une fenêtre 28 offrant un contrôle visuel sur la turbomachine 4 pendant son test, son inspection, et son installation dans le banc 2.

Afin de la tester, la turbomachine 4 peut être parée de certains équipements de test. Elle peut recevoir une bouche d'entrée 30 en forme de cloche. Elle peut également recevoir un ou plusieurs capots de test 32. Il peut s'agir de capots externes en contact de l'environnement de la turbomachine 4, ou de capots internes en contact du flux secondaire et/ou du flux primaire circulant dans la turbomachine 4. Ces capots de test 32 peuvent être munis de premiers capteurs 34 permettent d'obtenir des mesures propres à la turbomachine pendant les tests. En compléments, des deuxièmes capteurs 36 peuvent être prévus dans le banc d'essai 2 ; à distance de la turbomachine.

Ces capteurs (34 ; 36) permettent de renseigner ; par exemple sur une vitesse d'écoulement d'un flux. Ils peuvent également fournir des renseignements sur la température de l'air en écoulement. La pression peut également être mesurée. Des vibrations peuvent également être mesurées, par exemple pour déterminer un niveau sonore.

La sûreté du test dépend du bon montage des équipements de test. Il convient de vérifier l'identité de ces équipements, et qu'ils soient bien positionnés par rapport à la turbomachine. Le contrôle des positions des premiers capteurs 34 et des deuxièmes capteurs 36 est également nécessaire. Optionnellement le contrôle de l'état de marche de ces capteurs est réalisé.

A ces fins, un système de réalité augmentée 38 est mis à disposition de l'opérateur 24. Ce système 38 peut être portable. Il peut comprendre un module d'affichage 40 ; ou unité graphique ; telle une tablette ou un casque avec une lunette projetant une image vers l'opérateur. Le système de réalité augmentée 38 peut comprendre une caméra 42 permettant de filmer le banc d'essai 2. Elle permet de filmer les différents capteurs (34 ; 36), la turbomachine 4, les équipements de test, et d'en produire des images virtuelles.

Le système de réalité augmentée 38 peut comprendre un ordinateur avec un programme d'ordinateur qui produit justement les images virtuelles. Le programme d'ordinateur permet également de superposer des données sur les images virtuelles produites en temps réel. Les données ajoutées peuvent renseigner sur la conformité du banc d'essai avant de démarrer un test, ou pour poursuivre un test. Les données ajoutées permettent d'identifier des anomalies sur les équipements de test, tel qu'un mauvais positionnement d'un capot de test 32 qui ne serait pas correctement refermé. En pareil cas, le module d'affichage 40 montre un signal d'alerte, par exemple superposé à l'équipement de test concerné dans l'image virtuelle produite.

Le système de réalité augmentée 38 peut optionnellement être employé pendant la phase de test. A ce moment, les données superposées, et donc ajoutées, peuvent renseigner sur les informations des capteurs (34 ; 36). Il est ainsi possible d'ajouter des données relatives à la température, la pression, la vitesse du flux et des vibrations.

La présence d'une caméra 42 sur le module d'affichage 40 reste un aspect facultatif de l'invention. En effet, la caméra peut être fixée au passage 12. En option, le système comprend plusieurs caméras pour créer des images virtuelles d'inspection. Le système comprend des moyens pour déterminer la position et l'orientation du module d'affichage 40 et adapte l'image virtuelle en fonction du champ de vision de ce module d'affichage 40.

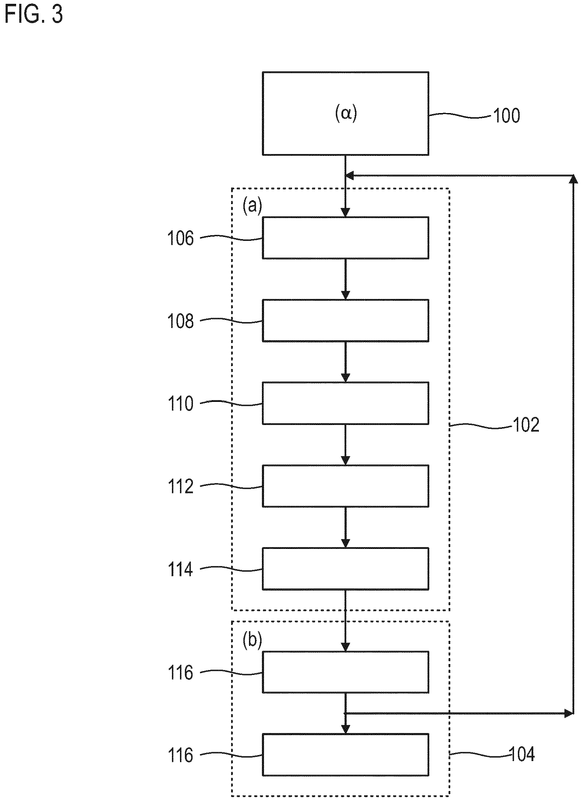

La figure 3 représente un diagramme du procédé de test de la turbomachine. Ce procédé peut être conduit à l'aide du système de réalité augmentée 38 présenté en figure 2, par exemple dans le banc d'essai des figure 1 et 2.

Le procédé peut comprendre les phases suivantes, éventuellement réalisées dans l'ordre qui suit :
(α) installation 100 de la turbomachine dans le banc d'essai ;
(a) inspection visuelle 102 de la conformité des conditions de test dans le banc d'essai à l'aide du système de réalité augmentée ;
(b) test 104 de la turbomachine dans le banc d'essai.

La phase (α) installation 100 comprend la fixation de la turbomachine sur ou sous son support de test, par exemple sous le bras de fixation. Optionnellement, cette étape comprend le remplacement des capots de série de la turbomachine par des capots de test. Enfin une bouche d'entrée peut être ajoutée. Les différents capteurs des capots de test peuvent être branchés à une unité centrale recueillant les données de test. Ces capteurs peuvent communiquer avec le système de réalité augmentée.

La phase (a) inspection visuelle 102 est conduite grâce au système de réalité augmentée qui offre une aide au contrôle. Pour effectuer l'inspection, la caméra balaye une partie ou l'ensemble de la zone de test, et analyse l'image générée. Ce contrôle peut être conduit en comparant des points de références réels à des images que doivent montrer ces points dans une situation conforme de test. Ces points peuvent être sur la turbomachine, et/ou sur une surface du couloir. La couleur et la luminosité des points peuvent être contrôlées. Les images conformes de ces points peuvent être contenues dans une base de données qui peut également être adaptée à différents modèles de turbomachines. Lorsqu'un point n'est pas conforme, il y a une anomalie ; par exemple une anomalie d'un premier type, éventuellement une anomalie majeure interdisant la réalisation du test.

En alternative ou en complément, le système de réalité augmentée peut chercher à identifier la présence de certaines entités dans le banc. La base de données peut comprendre des images virtuelles de référence d'êtres humains, d'outils employés pour le montage de la turbomachine, de capteurs. En cas de détection d'un outil ou d'une personne, un signal d'alarme est envoyé. Le système peut contrôler les images des capteurs présents. S'ils correspondent à ceux nécessaires aux conditions de test prédéfinies, la situation est conforme. A l'inverse, si un capteur identifié n'appartient pas à l'ensemble de ceux nécessaires, une alarme est déclenchée.

Le système de réalité augmentée peut communiquer avec les capteurs. Il peut afficher s'ils sont opérationnels ou s'ils sont en panne. Une telle panne peut être assimilée à une anomalie d'un deuxième type. Si le nombre de ces anomalies reste inférieur ou égal à un seuil prédéterminé, il reste possible d'effectuer la phase (b) test 104.

La phase (a) inspection visuelle 102 peut comprendre une succession d'étapes intermédiaires. Par exemple, les étapes intermédiaires peuvent comprendre :
- la vérification des capots de test 106 ;
- la vérification de la bouche d'entrée 108 ;
- la vérification des premiers capteurs 110 ;
- la vérification des deuxièmes capteurs 112 ;
- la vérification d'absence 114 de corps étranger dans le banc d'essai, et notamment dans le couloir.

Si ces vérifications aboutissent sur une situation réelle conforme, le procédé peut conduire la phase (b) test 104. Il est à noter que les vérifications peuvent s'effectuer entre plusieurs étapes intermédiaires d'essai 116, ou au cours de l'essai où la turbomachine fonctionne. Suivant une option de l'invention, le système de réalité augmentée peut rester actif pendant la phase (b) test. Il continue alors l'inspection du banc d'essai et de la turbomachine pendant le fonctionnement de cette dernière. Par exemple, il peut détecter une présence dans le banc en cours d'essai, ou éventuellement l'ouverture d'une porte. En outre, il est à même de percevoir un mouvement d'un élément fixe censé rester immobile. A titre d'exemple, il parvient à détecter un mouvement d'un volet en entrée ou en sortie, ou le mouvement d'une fixation d'un équipement moteur. Dès lors, le système est apte à anticiper un déverrouillage d'une fixation, par exemple d'un loquet, également appelé « latch ». Le système parvient également à détecter une apparition suspecte de fumée, ou un départ d'incendie. En réponse aux incidents précités, le système de réalité augmentée peut émettre un signal d'alarme. Il peut également interagir avec le banc d'essai de manière à interrompre automatiquement l'essai au cours duquel la ou les anomalies du premier type a/ont été détectée(s).

L'essai peut être interrompu suite à une anomalie du premier type, et/ou continuer malgré l'apparition d'une anomalie du deuxième type. Le procédé peut être itératif et/ou fonctionner en boucle.

## Revendications

1. Procédé de test d'une turbomachine (4) dans un banc d'essai (2), le procédé comprenant les phases suivantes :
(a) inspection visuelle (102) du banc d'essai (2) et/ou de la turbomachine (4) afin de déceler une éventuelle anomalie d'un premier type;
(b) test (104) de la turbomachine (4) dans le banc d'essai (2);
le procédé n'effectuant la phase (b) test (104) qu'en l'absence d'anomalie du premier type ;
**caractérisé en ce que**
des équipements de test (30 ; 32) sont placés dans le banc d'essai (2), notamment sur la turbomachine (4) ;
le banc d'essai (2) comprend un système de réalité augmentée (38) effectuant la phase (a) inspection visuelle (102) dans le banc d'essai (2) afin de déceler l'éventuelle anomalie du premier type et vérifier l'identité et le positionnement desdits équipements de test (30 ; 32).

2. Procédé selon la revendication 1 **caractérisé en ce que** lors de la phase (a) inspection (102), des points caractéristiques sont contrôlés à l'intérieur du banc d'essai (2) afin de déceler une ou plusieurs anomalies du premier type.

3. Procédé selon l'une des revendications 1 à 2 **caractérisé en ce que** lors de la phase (a) inspection (102), le système de réalité augmentée (38) compare le banc d'essai (2) réel et/ou la turbomachine (4) réelle à une ou plusieurs images virtuelles qui sont contenues dans une base de données.

4. Procédé selon la revendication 3 **caractérisé en ce que** la base de données comprend des images virtuelles d'éléments intrus, lors de la phase (a) inspection (102), le système (38) vérifie l'absence d'intrus; et en cas de détection d'un intrus le système signale une anomalie d'un premier type.

5. Procédé selon l'une des revendications 1 à 4 **caractérisé en ce que** lors de la phase (a) inspection (102), le système de réalité augmentée (38) produit une image virtuelle qu'il compare à une image virtuelle libre d'anomalie du premier type.

6. Procédé selon l'une des revendications 1 à 5 **caractérisé en ce que** la phase (a) inspection (102) comprend une inspection de capteurs (34 ; 36) à l'intérieur du banc d'essai (2).

7. Procédé selon l'une des revendications 1 à 6 **caractérisé en ce que** la phase (a) inspection (102) comprend la détection d'au moins une anomalie d'un deuxième type, le procédé effectuant la phase (b) test (104) en présence d'au moins une ou plusieurs anomalies du deuxième type.

8. Procédé selon l'une des revendications 1 à 7 **caractérisé en ce que** le banc d'essai (2) comprend un couloir (12) dans lequel la turbomachine (4) est disposée pendant la phase (a) inspection (102) et/ou pendant la phase (b) test (104), la phase (a) inspection étant au moins partiellement réalisée par un opérateur (24) dans ledit couloir.

9. Procédé selon l'une des revendications 1 à 8 **caractérisé en ce que** le banc d'essai (2) comprend une salle de pilotage (26) du test, par exemple attenante au couloir (12), la phase (a) inspection (102) étant au moins partiellement réalisée par un opérateur (24) depuis ladite salle (26).

10. Procédé selon l'une des revendications 1 à 9 **caractérisé en ce que** le système de réalité augmentée (38) reste actif pendant la phase (b) test (104), et continue l'inspection visuelle du banc d'essai (2) pendant la phase (b) test (104).

11. Banc d'essai (2) pour turbomachine (4), comprenant une zone de test de la turbomachine (4) et configuré pour réaliser une inspection visuelle de la zone de test, afin de déceler au moins une anomalie d'un premier type; le banc d'essai étant configuré, en outre, pour n'effectuer un test de la turbomachine (4) qu'en l'absence d'anomalie du premier type identifiée par l'inspection visuelle, **caractérisé en ce que** le banc d'essai comprend un système de réalité augmentée (38) configuré pour réaliser l'inspection visuelle, afin de déceler l'éventuelle anomalie d'un premier type et vérifier l'identité et le positionnement d'équipements de test (30 ; 32) placés dans le banc d'essai (2), notamment sur la turbomachine (4).

12. Banc d'essai (2) selon la revendication 11 **caractérisé en ce qu'**il comprend au moins 100 capteurs (34 ; 36), ou au moins 1000 capteurs, ou au moins 10000 capteurs.

13. Programme d'ordinateur comportant des instructions pour l'exécution des phases du procédé de test selon l'une des revendications 1 à 10.

14. Ordinateur sur lequel est enregistré un programme d'ordinateur comprenant des instructions pour l'exécution des phases (102 ; 104) du procédé de test selon quelconque des revendications 1 à 10, lorsque ledit programme est exécuté par un ordinateur connecté à au moins une caméra (42) configurée pour filmer tout ou partie du banc d'essai (2).

## Patentansprüche

1. Verfahren zum Prüfen einer Turbomaschine (4) in einem Prüfstand (2), umfassend die folgenden Phasen:
(a) Visuelle Inspektion (102) des Prüfstands (2) und/oder der Turbomaschine (4), um eine mögliche Anomalie eines ersten Typs zu erkennen;
(b) Prüfung (104) der Turbomaschine (4) auf dem Prüfstand (2);
wobei das Verfahren Phase (b) der Prüfung (104) nur dann ausführt, wenn keine Anomalie des ersten Typs vorliegt;
**dadurch gekennzeichnet, dass**
Prüfgeräte (30; 32) im Prüfstand (2), insbesondere an der Turbomaschine (4), angebracht sind;
der Prüfstand (2) ein System (38) mit erweiterter Realität umfasst, das die Phase (a) der visuellen Inspektion (102) in dem Prüfstand (2) durchführt, um die mögliche Anomalie des ersten Typs zu erkennen und die Identität und die Positionierung der genannten Prüfgeräte (30; 32) zu verifizieren.

2. Verfahren nach Anspruch 1, **dadurch gekennzeichnet, dass** während der Phase (a) der Inspektion (102) Merkmalspunkte im Inneren des Prüfstands (2) überprüft werden, um eine oder mehrere Anomalien des ersten Typs zu erkennen.

3. Verfahren nach Anspruch 1 oder 2, **dadurch gekennzeichnet, dass** während der Phase (a) der Inspektion (102) das System (38) für die erweiterte Realität den tatsächlichen Prüfstand (2) und/oder die tatsächliche Turbomaschine (4) mit einem oder mehreren virtuellen Bildern vergleicht, die in einer Datenbank enthalten sind.

4. Verfahren nach Anspruch 3, **dadurch gekennzeichnet, dass** die Datenbank virtuelle Bilder von unerwünschten Elementen enthält und das System (38) während der Phase (a) der Inspektion (102) die Abwesenheit eines unerwünschten Elements verifiziert; und das System eine Anomalie des ersten Typs signalisiert, falls ein unerwünschtes Element festgestellt wird.

5. Verfahren nach einem der Ansprüche 1 bis 4, **dadurch gekennzeichnet, dass** während der Phase (a) der Inspektion (102) das System (38) mit erweiterter Realität ein virtuelles Bild erzeugt, das es mit einem virtuellen Bild vergleicht, das frei von einer Anomalie des ersten Typs ist.

6. Verfahren nach einem der Ansprüche 1 bis 5, **dadurch gekennzeichnet, dass** die Phase (a) der Inspektion (102) eine Inspektion von Sensoren (34; 36) im Inneren des Prüfstands (2) umfasst.

7. Verfahren nach einem der Ansprüche 1 bis 6, **dadurch gekennzeichnet, dass** die Phase (a) der Inspektion (102) die Erfassung mindestens einer Anomalie eines zweiten Typs umfasst, wobei das Verfahren die Phase (b) der Prüfung (104) bei Vorhandensein mindestens einer oder mehrerer Anomalien des zweiten Typs durchführt.

8. Verfahren nach einem der Ansprüche 1 bis 7, **dadurch gekennzeichnet, dass** der Prüfstand (2) einen Korridor (12) umfasst, in dem die Turbomaschine (4) während der Phase (a) der Inspektion (102) und/oder während der Phase (b) des Prüfens (104) angeordnet ist, wobei die Phase (a) der Inspektion zumindest teilweise von einem Bediener (24) in dem Korridor durchgeführt wird.

9. Verfahren nach einem der Ansprüche 1 bis 8, **dadurch gekennzeichnet, dass** der Prüfstand (2) einen Prüfkontrollraum (26) umfasst, beispielsweise angrenzend an den Korridor (12), wobei die Phase (a) der Inspektion (102) zumindest teilweise von einem Bediener (24) in diesem Raum (26) durchgeführt wird.

10. Verfahren nach einem der Ansprüche 1 bis 9, **dadurch gekennzeichnet, dass** das System (38) mit erweiterter Realität während der Phase (b) der Prüfung (104) aktiv bleibt und die visuelle Inspektion des Prüfstands (2) während der Phase (b) der Prüfung (104) fortsetzt.

11. Prüfstand (2) für eine Turbomaschine (4), der einen Testbereich der Turbomaschine (4) umfasst und dazu ausgelegt ist, eine interne visuelle Inspektion in dem Prüfstand (2) durchzuführen, um mindestens eine Anomalie eines ersten Typs zu erkennen; wobei der Prüfstand außerdem dazu ausgelegt ist, eine Prüfung der Turbomaschine (4) nur dann durchzuführen, wenn keine Anomalie des ersten Typs, die durch die visuelle Inspektion identifiziert wird, vorliegt, **dadurch gekennzeichnet, dass** der Prüfstand (2) ein System (38) mit erweiterter Realität umfasst, das dazu ausgelegt ist, die visuelle Inspektion durchzuführen, um die mögliche Anomalie des ersten Typs zu erkennen und die Identität und die Positionierung von Prüfgeräten (30; 32), die im Prüfstand (2), insbesondere an der Turbomaschine (4), angeordnet sind, zu verifizieren.

12. Prüfstand (2) nach Anspruch 11, **dadurch gekennzeichnet, dass** er mindestens 100 Sensoren (34; 36), oder mindestens 1000 Sensoren, oder mindestens 10.000 Sensoren umfasst.

13. Computerprogramm mit Anweisungen zur Ausführung der Phasen des Prüfverfahrens nach einem der Ansprüche 1 bis 10.

14. Computer, auf dem ein Computerprogramm aufgezeichnet ist, das Befehle zur Ausführung von Phasen (102; 104) des Prüfverfahrens nach einem der Ansprüche 1 bis 10 enthält, wenn das Programm von einem Computer ausgeführt wird, der mit mindestens einer Kamera (42) verbunden ist, die so konfiguriert ist, dass sie einen Teil oder die Gesamtheit des Prüfstands (2) filmt.

## Claims

1. Method for testing a turbomachine (4) in a test bench (2), the method comprising the following phases:
(a) visual inspection (102) of the test bench (2) and/or of the turbomachine (4) in order to detect a possible anomaly of a first type;
(b) testing (104) of the turbomachine (4) in the test bench (2);
the method executing phase (b) of testing (104) only in the absence of an anomaly of the first type;
**characterized in that**
items of test equipment (30; 32) are placed in the test bench (2), notably on the turbomachine (4);
the test bench (2) comprises an augmented-reality system (38) performing the phase (a) of visual inspection (102) in the test bench (2) in order to detect the possible anomaly of the first type and verify identity and positioning of said items of test equipment (30; 32).

2. Method according to Claim 1, **characterized in that** during the phase (a) of inspection (102), feature points are checked inside the test bench (2) in order to detect one or more anomalies of the first type.

3. Method according to Claim 1 or 2, **characterized in that** during the phase (a) of inspection (102), the augmented-reality system (38) compares the actual test bench (2) and/or the actual turbomachine (4) with one or more virtual images contained in a database.

4. Method according to Claim 3, **characterized in that** the database contains virtual images of intruding elements, and during the phase (a) of inspection (102), the system (38) verifies the absence of intrusion; and the system signals an anomaly of the first type in the case that an intrusion is detected.

5. Method according to one of Claims 1 to 4, **characterized in that** during the phase (a) of inspection (102), the augmented-reality system (38) produces a virtual image which it compares with a virtual image that is free of an anomaly of the first type.

6. Method according to one of Claims 1 to 5, **characterized in that** the phase (a) of inspection (102) comprises an inspection of sensors (34; 36) inside the test bench (2).

7. Method according to one of Claims 1 to 6, **characterized in that** the phase (a) of inspection (102) comprises detecting at least one anomaly of a second type, the method performing the phase (b) of testing (104) in the presence of at least one or more anomalies of the second type.

8. Method according to one of Claims 1 to 7, **characterized in that** the test bench (2) comprises a corridor (12) in which the turbomachine (4) is disposed during the phase (a) of inspection (102) and/or during the phase (b) of testing (104), the phase (a) of inspection being at least partially carried out by an operator (24) in said corridor.

9. Method according to one of Claims 1 to 8, **characterized in that** the test bench (2) comprises a test control room (26), for example adjoining the corridor (12), the phase (a) of inspection (102) being at least partially carried out by an operator (24) in said room (26).

10. Method according to one of Claims 1 to 9, **characterized in that** the augmented-reality system (38) remains active during the phase (b) of testing (104), and continues the visual inspection of the test bench (2) during the phase (b) of testing (104).

11. Test bench (2) for a turbomachine (4), comprising a test zone of the turbomachine (4) and configured to carry out an internal visual inspection in the test bench (2) in order to detect at least one anomaly of a first type; the test bench further being further configured to perform a test of the turbomachine (4) only in the absence of an anomaly of the first type identified by the visual inspection, **characterized in that** the test bench (2) comprises an augmented-reality system (38) configured for performing the visual inspection, in order to detect the possible anomaly of the first type and verify identity and positioning of items of test equipment (30; 32) placed in the test bench (2), notably on the turbomachine (4).

12. Test bench (2) according to Claim 11, **characterized in that** it comprises at least 100 sensors (34; 36), or at least 1000 sensors, or at least 10 000 sensors.

13. Computer program comprising instructions for executing the phases of the test method according to one of Claims 1 to 10.

14. Computer on which is recorded a computer program comprising instructions for executing phases (102; 104) of the test method according to any of Claims 1 to 10, when said program is executed by a computer connected to at least one camera (42) configured to film part or all of the test bench (2).
